# FASCICULE DE BREVET EUROPEEN

(11) **EP 2 011 733 B1**
(45) Date de publication et mention de la délivrance du brevet: **19.08.2009**
(21) Numéro de dépôt: 08009543.3
(22) Date de dépôt: 26.05.2008
(51) Int. Cl.: B64C 27/48, B64C 27/473

(54) **Pale munie d'un longeron à enroulement horizontal et procédé de fabrication d'un tel longeron**
Blatt mit Längsträger mit horizontaler Aufrollung und Herstellungsverfahren eines solchen Längsträgers
Blade equipped with a spar with horizontal coil and method for manufacturing such a spar

(30) Priorité: 02.07.2007 FR 0704744
(43) Date de publication de la demande: 07.01.2009
(73) Titulaire: EUROCOPTER, 13725 Marignane Cédex (FR)
(72) Inventeur: Parisy, Jean-Marie, 75003 Paris (FR); Hirsch, Jean-François, 13090 Aix en Provence (FR)
(74) Mandataire: Pouillot, Laurent Pierre Paul

(56) Documents cités:
- FR-A- 2 186 380
- FR-A- 2 362 750
- GB-A- 2 262 966
- US-A- 5 632 602

## Description

La présente invention concerne une pale de giravion, munie d'un longeron à enroulement horizontal, ainsi que le procédé de fabrication de ce longeron.

Un giravion est muni d'au moins un moteur qui entraîne un rotor principal ayant pour but d'assurer la sustentation, voire même la propulsion, de l'appareil, Ce rotor comporte un moyeu, mis en mouvement via un arbre rotor entraîné par le moteur, sur lequel sont agencées une pluralité de pales.

Lors de leur mouvement rotatif, les pales sont soumises à un torseur d'efforts et par suite subissent un effort centrifuge ainsi que des efforts multiples dus au battement, à la traînée et à la torsion, la torsion étant provoquée notamment par les changements de pas visant à modifier l'inclinaison des pales par rapport au plan du moyeu,

En outre, le moyeu comporte généralement une pluralité de bras, éventuellement flexibles en battement, au bout desquels sont agencées les pales. Les efforts dus en particulier à la force centrifuge sont alors transmis à la zone centrale non flexible du moyeu par le longeron de la pale.

On connaît un premier type de pale équipée d'un longeron, qui à partir du pied de la pale s'étend le long de l'envergure de la pale, agencé au niveau du bord d'attaque de la pale. On nommera ce type de longeron « longeron de bord d'attaque » par commodité dans la suite du texte.

Ce type de longeron est efficace mais semble insuffisant pour les pales modernes qui présentent des géométries complexes, pour des raisons acoustiques par exemple.

On connaît un deuxième type de pale muni d'un longeron dénommé longeron réparti. Un tel longeron consiste en un longeron de bord d'attaque qui est prolongé par deux parties disposées à plat respectivement sur l'intrados et l'extrados de la pale.

Toutefois, il est délicat d'attacher une pale équipée d'un longeron réparti sur un moyeu de rotor.

On connaît le document FR 2 362 750, et par le document US 3923422 un dispositif pour réaliser une telle fonction. Au niveau du pied de la pale, le longeron réparti est enroulé autour d'un axe vertical parallèle à l'axe de rotation du rotor.

Toutefois, afin de réaliser un enroulement vertical, il convient de vriller la partie du longeron disposée à plat sur l'extrados et l'intrados de la pale. Un tel vrillage de l'ordre de quatre-vingt dix degrés présente l'inconvénient d'être éventuellement destructif, dans la mesure où un longeron est principalement constitué de fibres unidirectionnelles dans le cas de pales en matériaux composites.

Il est de plus malaisé de disposer à plat sur l'extrados et l'intrados de la pale les fibres unidirectionnelles provenant de la section vrillée du longeron réparti.

Le vrillage peut alors conduire à une faible reproductivité de la forme ainsi que des caractéristiques mécaniques et vibratoires d'une pale à une autre.

De plus, si des éléments de remplissage doivent être agencés dans la pale, ces derniers seront de forme complexe et varieront d'une pale à l'autre puisque le vrillage du longeron n'est pas reproduit à l'identique. Il devient ainsi difficile d'automatiser la fabrication des pales.

Il est alors envisageable d'enrouler le longeron « à l'horizontale », conformément à la proposition décrite par le document FR 2186380,

Toutefois, cette solution est proposée uniquement pour un longeron disposé à plat sur l'extrados et l'intrados de la pale et non pas sur le bord d'attaque de cette pale. Par suite, il ne s'agit pas d'un longeron réparti mais d'un tout autre type de longeron. En outre, le document FR2186380 ne présente aucun enseignement relatif au procédé permettant l'enroulement à l'horizontale.

Enfin, cette pale ne comporte pas de moyen de fixation. Elle est alors agencée dans un bras d'un moyeu de giravion ayant une géométrie très particulière puis solidarisé à ce bras à l'aide d'un axe qui traverse le bras pour bloquer le longeron de la pale au niveau de l'enroulement de ce longeron.

Pour vraisemblablement éviter un battement excessif de la pale, le bras comporte deux plaques supérieure et inférieure qui enserrent le longeron de la pale.

La pale du document FR2186380 est donc une pale spécifique dépourvue de longeron réparti et qui n'est adaptable que sur un type particulier de moyeu de rotor.

La présente invention a pour objet de proposer une pale pourvue d'un longeron réparti que l'on peut agencer sur la plupart des rotors existants, permettant de s'affranchir des limitations mentionnées ci-dessus, ce longeron réparti ne présentant pas de tronçon vrillé à quatre-vingt dix degrés.

Selon l'invention, une pale de giravion est munie d'un longeron réparti sur un bord d'attaque, un extrados et un intrados de la pale. Cette pale est remarquable en ce qu'elle est pourvue d'une douille de fixation intégrée à son pied de pale pour fixer la pale sur un rotor, la douille de fixation comportant un arbre horizontal, c'est-à-dire sensiblement perpendiculaire à l'envergure de la pale et à un axe de rotation du rotor, autour duquel est enroulé partiellement le longeron réparti de la pale.

La pale possède donc une douille de fixation intégrée lui permettant d'être fixée sur des moyeux divers ce qui donne un caractère universel à la pale selon l'invention.

De plus, la pale comporte un longeron réparti horizontal qui est enroulé horizontalement autour d'un arbre horizontal de la douille de fixation, au niveau de son pied de pale, Les risques liés à un vrillage à quatre-vingt dix degrés du longeron sont donc nécessairement absents avec cette pale.

Avantageusement, l'arbre horizontal comprend au moins une zone d'enroulement, autour de laquelle est enroulée le longeron de la pale, et au moins une zone de fixation pour fixer la douille de fixation au rotor.

L'arbre horizontal est donc solidarisé à la pale via sa ou ses zones d'enroulement ce qui implique que la douille de fixation est une partie à part entière de la pale.

Par ailleurs, l'arbre horizontal est aussi pourvu d'au moins une zone de fixation par laquelle la pale sera fixée au moyeu d'un rotor de giravion,

Selon un mode de réalisation préféré, chaque zone de fixation est agencée entre deux zones d'enroulement. L'arbre horizontal est alors muni d'un nombre de zones d'enroulement supérieur d'une unité au nombre de zones de fixation.

Lorsque l'arbre horizontal est notamment pourvu de trois zones d'enroulement, cet arbre horizontal possède de deux zones de fixation. Ainsi, l'arbre horizontal comporte successivement une première zone d'enroulement, une première zone de fixation, une deuxième zone d'enroulement, une deuxième zone de fixation puis, une troisième zone d'enroulement.

Cette configuration est particulièrement bien adaptée du fait de la présence d'un longeron réparti, Le longeron réparti comporte alors trois rubans distincts accolés les uns aux autres dans la partie courante de la pale, un ruban pour la partie du longeron agencée au bord d'attaque de la pale et deux rubans pour la partie du longeron disposée à plat sur les extrados et intrados de la pale.

De plus, les moyeux de rotor de giravion prévoyant la plupart du temps un moyen vertical pour fixer la pale au moyeu, la douille de fixation est munie d'au moins un axe de fixation vertical creux, c'est à dire un axe parallèle à l'axe de rotation du rotor, qui traverse chaque zone de fixation de l'arbre horizontal.

Ainsi, le moyen vertical de fixation du moyeu peut traverser l'axe de fixation vertical de la douille de fixation pour fixer la pale au moyeu. Il n'est donc pas nécessaire d'utiliser un moyeu particulier pour l'installation de la pale sur ce moyeu.

La pale selon l'invention est ainsi adaptable sur les moyeux existants sans surcoût financier.

En outre, il est avantageux que chaque zone d'enroulement de l'arbre horizontal présente un profil oblong, à savoir plus long que large et muni de bouts arrondis. La surface de contact entre l'arbre horizontal et le longeron est alors optimisée ce qui garantit une bonne adhérence de la douille de fixation à ce longeron réparti. De plus, un tel contact maximise la transmission des efforts subis par la pale de son longeron réparti vers le moyeu via l'arbre horizontal.

Enfin, ladite au moins une zone de fixation saille de ladite au moins une zone d'enroulement, d'une épaisseur correspondant de préférence à au moins l'épaisseur du longeron réparti sur tout le pourtour de ladite au moins une zone d'enroulement en contact avec ce longeron réparti.

En variante, si le longeron réparti est recouvert d'un revêtement ladite au moins une zone de fixation peut alors saillir de ladite au moins une zone d'enroulement, d'une épaisseur correspondant à au moins la somme de l'épaisseur du longeron réparti et du revêtement.

Par conséquent, la ou les zones de fixation sont en saillies de la douille par rapport aux zones d'enroulement. Néanmoins, une fois l'enroulement terminé, le longeron comble les espaces créés ce qui confère à l'ensemble un caractère compact et donne à l'ensemble la solidité requise,

La présente invention a aussi pour objet un procédé permettant d'enrouler un longeron autour de la douille de fixation de la pale selon l'invention.

Ainsi, selon l'invention, un procédé pour enrouler un longeron d'une pale de giravion autour d'un arbre horizontal d'une douille de fixation de la pale, le longeron étant un longeron réparti sur un bord d'attaque ainsi que sur deux surfaces extérieures représentant un extrados et un intrados de cette pale, le longeron comportant au moins un ruban longitudinal composé d'une pluralité de fibres minérales superposées, des fibres minérales unidirectionnelles de carbone ou de verre par exemple, est notamment remarquable en ce que l'on procède successivement aux étapes suivantes :
a) on dispose une première fibre sur une surface extérieure de la pale,
b) on enroule ladite première fibre autour dudit arbre horizontal puis on la dispose sur l'autre surface extérieure de la pale afin que la première fibre ait une forme de C allongé pour recouvrir au moins partiellement l'extrados et l'intrados de la pale sur une première longueur en partant du pied de la pale,
c) on renouvelle les étapes a) et b) avec une deuxième fibre que l'on dispose sur la première fibre, la deuxième fibre recouvrant au moins partiellement l'extrados et l'intrados de la pale sur une deuxième longueur en partant du pied de la pale supérieure à la première longueur.

Avantageusement, on réitère au moins une fois l'étape c) en augmentant pour chaque fibre suivante la longueur d'extrados et intrados recouverte par la fibre disposée sur la pale.

Par conséquent, le longeron comporte une pluralité de fibres superposées, la deuxième fibre étant plus longue que la première fibre, la troisième fibre étant plus longue que la deuxième fibre et ainsi de suite. Ainsi, le longeron a une épaisseur qui décroît progressivement du pied de la pale jusqu'à son extrémité libre extérieure. Cette caractéristique permet d'optimiser la masse du longeron en ne pénalisant pas ses performances, les contraintes mécaniques à l'extrémité libre extérieure de la pale étant moindres qu'au pied de la pale.

De plus, on constate que chaque fibre du longeron est aisément enroulée autour de l'arbre horizontal de la douille de fixation ce qui garantit une bonne reproductibilité des pales.

Selon une variante du procédé, au cours de l'étape b), on enroule la première fibre autour de l'arbre horizontal et d'un arbre de montage disposé entre le pied de la pale et l'extrémité libre extérieure de la pale afin d'obtenir un cylindre allongé creux, puis on coupe la première fibre au niveau de l'arbre de montage afin d'obtenir la forme de C allongé.

De même, au cours de l'étape c), on décale l'arbre de montage en le rapprochant de l'extrémité libre extérieure de la pale et on réitère l'étape b) avec une deuxième fibre.

On réitère alors le processus jusqu'à ce que le longeron réparti atteigne les dimensions requises, à savoir la longueur et l'épaisseur désirée.

L'opérateur se sert donc de deux arbres, l'arbre horizontal de la douille de fixation et un arbre de montage, pour enrouler correctement les fibres, Toutefois, l'arbre de montage n'ayant aucune autre fonction, l'opérateur coupe la fibre à la longueur souhaitée au niveau de l'extrados et de l'intrados puis enlève l'arbre de montage. Il le déplace alors pour recommencer l'opération avec une autre fibre du longeron.

Enfin, le procédé selon l'invention est lié à la pale selon l'invention par un même concept inventif visant à réaliser une pale ayant un longeron réparti avec une bonne reproductivité en garantissant ses performances mécaniques et aérodynamiques. Les étapes a) à c) du procédé sont optimisées si elles sont mises en oeuvres sur une pale selon l'invention.

L'invention et ses avantages apparaîtront avec plus de détails dans le cadre de la description qui suit avec un exemple de réalisation donné à titre illustratif en référence aux figures annexées qui représentent :
- la figure 1, une vue schématique du pied de la pale selon l'invention,
- les figures 2 à 4, des coupes de la douille de fixation de ladite pale, et
- les figures 5 à 7, des schémas explicitant le procédé selon l'invention,

Les éléments présents dans plusieurs figures distinctes sont affectés d'une seule et même référence.

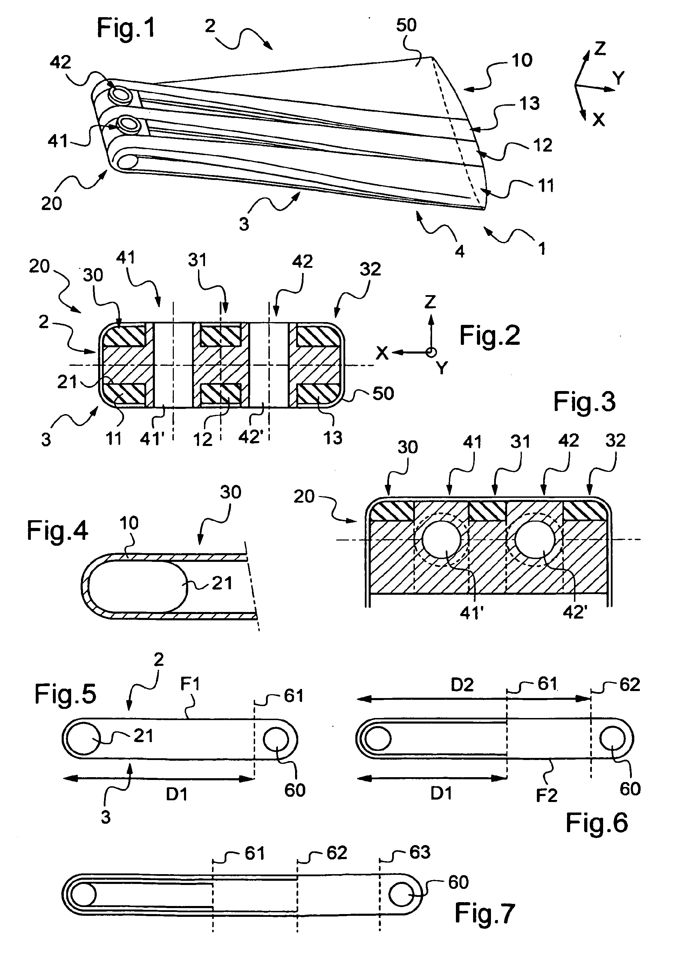

La figure 1 présente une vue schématique d'une pale 1 selon l'invention.

La pale 1 est munie d'un longeron réparti 10 qui s'étend selon l'envergure de la pale 1, suivant le deuxième axe horizontal Y.

De plus, la pale 1 comporte une douille de fixation 20 à son pied de pale afin de pourvoir être fixée à un moyeu de giravion,

On note que la pale 1 est recouverte d'un revêtement externe 50, ce revêtement ne participant que faiblement, voire même pas du tout, à la transmission des efforts subis par la pale 1 au moyeu du rotor du giravion, contrairement au longeron réparti 10.

Ce longeron réparti 10 est pourvu de trois rubans 11, 12, 13 adjacents les uns aux autres, chaque ruban 11, 12, 13 comportant des fibres minérales.

Le premier ruban 11 recouvre le bord d'attaque 4 de la pale au niveau de son extrados 2 puis est enroulé partiellement autour de la douille de fixation 20, sur une demi-circonférence, pour recouvrir le bord d'attaque 4 de la pale au niveau de son intrados 3.

Les deuxième et troisième rubans 12 recouvrent l'extrados 2 de la pale 1. Ces deuxième et troisième rubans 12 sont enroulés partiellement autour de la douille de fixation 20, sur une demi-circonférence, puis recouvrent l'intrados 3 de la pale 1.

Ainsi le longeron réparti 10 a une forme de C allongé.

De plus, les premier, deuxième et troisième rubans 11, 12, 13 du longeron réparti 10 sont adjacents deux à deux dans la partie courante de la pale et forment ainsi une surface continue. Par contre, au pied de la pale, ces premier, deuxième et troisième rubans 11, 12, 13 ne sont plus en contact les uns avec les autres de manière à ne pas obturer les zones de fixation de la douille de fixation au moyeu du rotor.

La figure 2 présente une coupe de la douille de fixation 20, vue du moyeu du rotor du giravion.

La douille de fixation 20 comporte un arbre horizontal 21 qui est dirigé selon un premier axe horizontal X. Cet arbre horizontal 21 est donc perpendiculaire à l'envergure de la pale 1 qui est dirigée selon le deuxième axe horizontal Y. De plus, l'arbre horizontal 21 est perpendiculaire à l'axe de rotation du rotor du giravion qui est dirigé selon un axe en élévation Z.

Par ailleurs, l'arbre horizontal 21 est muni des zones d'enroulement 30, 31, 32 et de zones de fixations 41, 42, chaque zone de fixation étant comprise entre deux zones d'enroulement.

Les fibres constituant les premier, deuxième et troisième rubans 11, 12, 13 sont donc enroulées autour des zones d'enroulement 30, 31, 32 de l'arbre horizontal 21. A contrario, les zones de fixation 41, 42 ne sont pas recouvertes par le longeron réparti 10.

Les zones de fixation sont donc dissociées des zones d'enroulement ce qui est particulièrement intéressant. En effet, Il est possible d'augmenter la surface en section de profil du longeron réparti en augmentant la largeur des premier et troisième rubans 11, 13 sans que l'interface pale/moyeu soit changée, Une pale générant des efforts mécaniques importants peut alors être agencée sur un moyeu prévu pour une pale générant des efforts mécaniques moindres.

En outre, les zones de fixation 41, 42 saillent des zones d'enroulement, d'une épaisseur correspondant à l'épaisseur des rubans du longeron, sur tout le pourtour des zones d'enroulement en contact avec le longeron réparti 10.

Ainsi, sur la figure 1, on constate que les zones de fixation saillent des zones d'enroulement au niveau de l'extrados 2 et de l'Intrados 3 de la pale.

Par contre, en référence à la figure 3, vue de dessus, les zones de fixation saillent des zones d'enroulement du côté de la douille de fixation 20 la plus proche du moyeu, une fois la pale 1 agencée sur ce moyeu. En effet, afin d'obtenir une forme de C allongé, le longeron n'entoure que partiellement la douille de fixation ce qui explique cette configuration.

Par conséquent, la douille de fixation est un ensemble monobloc qui comporte successivement des zones d'enroulement et des zones de fixation. De plus, le longeron réparti 10 est enroulé partiellement autour des zones d'enroulement de manière à former un ensemble compact n'ayant ni des creux ni des bosses,

Par ailleurs, les zones de fixation 41, 42 consistent chacune en un axe de fixation vertical 41', 42' creux qui traverse la douille de fixation 20 verticalement, selon l'axe en élévation Z qui est parallèle à l'axe de rotation du rotor.

Des moyens de fixation usuels sont alors insérés dans ces axes verticaux 41', 42' creux pour fixer la pale au moyeu du rotor.

La figure 4 présente une coupe de la douille de fixation selon le premier axe horizontal X.

Cette figure 4 montre plus particulièrement une zone d'enroulement 30 de l'arbre horizontal 21 qui présente un profil oblong, présentant une partie inférieur et supérieur plane et des bouts arrondis. L'arbre horizontal 21 a alors la forme d'un cylindre oblong ce qui maximise le contact avec le longeron réparti 10 par rapport à d'autres formes, cylindrique par exemple.

Les figures 5 à 7 présentent des vues schématiques explicitant le procédé à mettre en oeuvre pour permettre la fabrication d'un longeron réparti selon l'invention qui est partiellement enroulé autour d'un arbre horizontal 21.

En référence à la figure 5, durant une étape a), un opérateur dispose une première fibre F1 du longeron réparti 10 sur une surface extérieure de la pale, l'extrados 2 par exemple.

Durant une étape b), l'opérateur enroule cette première fibre F1 autour de l'arbre horizontal 21 de la douille de fixation 20 de la pale. L'opérateur dispose ensuite la première fibre F1 sur l'autre surface extérieure de la pale, l'intrados 3, afin que cette première fibre ait une forme de C allongé pour recouvrir au moins partiellement l'extrados et l'intrados de la pale sur une première longueur en partant du pied de la pale,

Selon une variante de l'invention, durant l'étape b), l'opérateur met en oeuvre un arbre de montage 60 pour faciliter l'enroulement de la première fibre F1. L'opérateur enroule alors aisément la première fibre F1 autour des arbres horizontal 21 et de montage 60.

Une fois l'enroulement réalisé, l'opérateur coupe la première fibre selon une direction 61 et enlève l'arbre de montage 60 ainsi que l'excédent de fibres qui recouvre cet arbre de montage,

La première fibre a par conséquent la forme de C allongé souhaitée et recouvre l'extrados 2 et l'intrados 3 sur une première longueur D1 à partir du pied de la pale.

En référence à la figure 6, on renouvelle les étapes a) et b) précédentes avec une deuxième fibre F2 que l'on dispose sur la première fibre F1, la deuxième fibre recouvrant au moins partiellement l'extrados et l'intrados de la pale sur une deuxième longueur D 2 en partant du pied de la pale.

Selon la variante de l'invention, l'opérateur utilise l'arbre de montage 60 pour faciliter l'enroulement, en ayant pris soin de décaler cet arbre de montage de façon à le rapprocher De l'extrémité libre extérieure de la pale.

La deuxième longueur D2 de recouvrement de l'extrados et de l'intrados par la deuxième fibre F2 est ainsi supérieure à la première longueur D1 de recouvrement de la première fibre F1. En référence à la figure 7, on renouvelle les étapes avec une troisième fibre en prenant soin de toujours augmenter la longueur de recouvrement de l'extrados et de l'intrados par la nouvelle fibre. Par suite, on réitère le procédé aussi souvent que nécessaire afin d'obtenir les premier, deuxième et troisième rubans 11, 12, 13.

Ainsi, on obtient un longeron muni d'une pluralité de fibres minérales superposées constituant ces premier, deuxième et troisième rubans 11, 12, 13, l'épaisseur du longeron décroissant du pied de la pale vers son extrémité libre extérieure,

Lorsque le longeron réparti comporte une pluralité de rubans, adjacents, chaque ruban est alors obtenu en mettant en oeuvre le procédé explicité,

Naturellement, la présente invention est sujette à de nombreuses variations quant à sa mise en oeuvre. Bien qu'un mode de réalisation ait été décrit, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Pale (1) de giravion pourvue d'une douille de fixation (20) intégrée à son pied de pale pour fixer la pale sur un rotor,
ladite pale étant munie d'un longeron réparti (10) sur un bord d'attaque (4), un extrados (2) et un intrados (3) de la pale, ladite douille de fixation (20) comportant un arbre horizontal (21), perpendiculaire à l'envergure de la pale et à un axe de rotation dudit rotor, autour duquel est enroulé partiellement le longeron réparti (20) de ladite pale, **caractérisée en ce que**, ledit arbre horizontal (21) comprenant au moins deux zones d'enroulement (30, 31, 32) autour de laquelle est enroulé le longeron réparti (10) de la pale et au moins une zone de fixation (41, 42) pour fixer ladite douille de fixation (20) audit rotor, chaque zone de fixation (41, 42) est agencée entre deux zones d'enroulements (30-31, 31-32).

2. Pale de giravion selon la revendication 1,
**caractérisée en ce que** ledit arbre horizontal (21) est muni d'un nombre de zones d'enroulement (30, 31, 32) supérieur d'une unité au nombre de zones de fixation (41, 42).

3. Pale de giravion selon l'une quelconque des revendications 1 à 2,
**caractérisée en ce que** ladite douille de fixation (20) est munie d'au moins un axe de fixation (41', 42') vertical creux, à savoir parallèle au dit axe de rotation du rotor, qui traverse chaque zone de fixation dudit arbre horizontal (21).

4. Pale de giravion selon l'une quelconque des revendications 1 à 3,
**caractérisée en ce que** chaque zone d'enroulement (30, 31, 32) dudit arbre horizontal (21) présente un profil oblong,

5. Pale de giravion selon l'une quelconque des revendications 1 à 4,
**caractérisée en ce que** chaque zone de fixation (41, 42) dudit arbre horizontal (21) présente un profil oblong.

6. Pale de giravion selon l'une quelconque des revendications 1 à 5,
**caractérisée en ce que** ladite au moins une zone de fixation (41, 42) saille de ladite au moins une zone d'enroulement (30, 31, 32) sur tout le pourtour de ladite au moins une zone d'enroulement (30, 31, 32) en contact avec le longeron réparti (10).

7. Pale de giravion selon la revendication 6,
**caractérisée en ce que** ladite au moins une zone de fixation (41, 42) saille de ladite au moins une zone d'enroulement (30, 31, 32) d'une épaisseur correspondant à au moins l'épaisseur du longeron réparti (10).

8. Procédé pour enrouler un longeron d'une pale de giravion autour d'un arbre horizontal (21) d'une douille de fixation (20) de ladite pale, ledit longeron étant un longeron réparti (10) sur un bord d'attaque (4) ainsi que sur deux surfaces extérieures représentant un extrados (2) et un intrados (3) de cette pale, ledit longeron comportant au moins un ruban (11, 12, 13) longitudinal composé d'une pluralité de fibres (F1, F2) minérales superposées,
**caractérisé en ce que** l'on procède aux étapes suivantes :
a) on dispose une première fibre (F1) sur une surface extérieure (2) de la pale,
b) on enroule ladite première fibre (F1) autour dudit arbre horizontal (21) puis on la dispose sur l'autre surface extérieure (3) de la pale afin que ladite première fibre (F1) ait une forme de C allongé pour recouvrir au moins partiellement ledit extrados (2) et ledit intrados (3) de la pale sur une première longueur (D1) en partant du pied de la pale,
c) on renouvelle les étapes a) et b) avec une deuxième fibre (F2) que l'on dispose sur ladite première fibre (F1), la deuxième fibre (F2) recouvrant au moins partiellement ledit extrados (2) et ledit intrados (3) de la pale sur une deuxième longueur (D2) en partant du pied de la pale supérieure à ladite première longueur (D1),
et **en ce que**, au cours de l'étape b), on enroule la première fibre (F1) autour dudit arbre horizontal (21) et d'un arbre de montage (60) disposé entre le pied de la pale et le saumon de la pale afin d'obtenir un cylindre allongé creux, puis on coupe la première fibre (F1) au niveau dudit arbre de montage (60) afin d'obtenir forme de C allongé.

9. Procédé selon la revendication 8,
**caractérisé en ce que** l'on réitère au moins une fois l'étape c) en augmentant pour chaque fibre suivante la longueur d'extrados et intrados recouverte par la fibre disposée sur la pale.

10. Procédé selon l'une quelconque des revendications 8 à 9,
**caractérisé en ce que**, au cours de l'étape c), on décale l'arbre de montage en le rapprochant du saumon de la pale et on réitère l'étape b) avec une deuxième fibre.

11. Procédé selon l'une quelconque des revendications 8 à 10,
**caractérisé en ce que** les étapes a) à c) sont mises en oeuvres sur une pale selon l'une quelconque des revendications 1 à 7.

## Claims

1. Rotorcraft blade (1) provided with a fastening bush (20) integrated in the blade root for fastening the blade to a rotor,
said blade being provided with a distributed spar (10) on a leading edge (4), a suction side (2), and a pressure side (3) of the blade, said fastening bush (20) including a horizontal shaft (21), perpendicular to the span of the blade and to an axis of rotation of said rotor, around which the distributed spar (10) of said blade is partially wound, **characterised in that** said horizontal shaft (21) comprises at least two winding zones (30, 31, 32) around which the distributed spar (10) of the blade is wound, and at least one fastening zone (41, 42) for fastening said fastening bush (20) to said rotor, and each fastening zone (41, 42) is arranged between two winding zones (30-31, 31-32).

2. Rotorcraft blade according to Claim 1,
**characterised in that** said horizontal shaft (21) is provided with a number of winding zones (30, 31, 32) that is one greater than the number of fastening zones (41, 42).

3. Rotorcraft blade according to either one of Claims 1 to 2,
**characterised in that** said fastening bush (20) is provided with at least one hollow vertical fastening axis (41', 42'), i.e. parallel to said axis of rotation of the rotor, and passing through each fastening zone of said horizontal shaft (21).

4. Rotorcraft blade according to any one of Claims 1 to 3,
**characterised in that** each winding zone (30, 31, 32) of said horizontal shaft (21) has an oblong profile.

5. Rotorcraft blade according to any one of Claims 1 to 4,
**characterised in that** each fastening zone (41, 42) of said horizontal shaft (21) has an oblong profile.

6. Rotorcraft blade according to any one of Claims 1 to 5,
**characterised in that** said at least one fastening zone (41, 42) projects from said at least one winding zone (30, 31, 32) over the entire periphery of said at least one winding zone (30, 31, 32) in contact with the distributed spar (10).

7. Rotorcraft blade according to Claim 6,
**characterised in that** said at least one fastening zone (41, 42) projects from said at least one winding zone (30, 31, 32) by a thickness corresponding at least to the thickness of the distributed spar (10).

8. Method of winding a spar of a rotorcraft blade around a horizontal shaft (21) of a fastening bush (20) of said blade, said spar being a distributed spar (10) on a leading edge (4) and on two outside surfaces representing a suction side (2) and a pressure side (3) of this blade, said spar comprising at least one longitudinal tape (11, 12, 13) made up of a plurality of superposed mineral fibres (F1, F2),
**characterised in that** the following steps are performed:
a) a first fibre (F1) is placed on an outer surface (2) of the blade,
b) said first fibre (F1) is wound around said horizontal shaft (21) and then placed on the other outer surface (3) of the blade so that said first fibre (F1) forms an elongate C-shape to cover said suction side (2) and said pressure side (3) of the blade at least partially over a first length (D1) starting from the root of the blade,
c) steps a) and b) are repeated with a second fibre (F2) that is placed on said first fibre (F1), the second fibre (F2) covering said suction side (2) and said pressure side (3) of the blade at least partially over a second length (D2) starting from the root of the blade, the second length being greater than said first length (D1),
and **in that**, during step b), the first fibre (F1) is wound around said horizontal shaft (21) and a mounting shaft (60) placed between the root of the blade and the tip of the blade so as to obtain a hollow elongate cylinder, and then the first fibre (F1) is cut in the region of said mounting shaft (60) so as to obtain the elongate C-shape.

9. Method according to Claim 8,
**characterised in that** step c) is repeated at least once with the length of the suction side and of the pressure side that is covered by the fibre placed on the blade being increased for each following fibre.

10. Method according to either one of Claims 8 to 9,
**characterised in that**, during step c), the mounting shaft is shifted towards the tip of the blade and step b) is repeated with a second fibre.

11. Method according to any one of Claims 8 to 10,
**characterised in that** steps a) to c) are implemented on a blade according to any one of Claims 1 to 7.

## Patentansprüche

1. Drehflügler-Blatt (1), das mit einer Befestigungsbüchse (20) versehen ist, die in seinen Blattfuß integriert ist, um das Blatt an einem Rotor zu befestigen, wobei das Blatt mit einem aufgeteilten Holm (10) an einer Vorderkante (4), einer Oberseite (2) und einer Unterseite (3) des Blatts versehen ist, wobei die Befestigungsbüchse (20) eine waagrechte Welle (21) lotrecht zur Schaufelhöhe des Blatts und zu einer Drehachse des Rotors aufweist, um die der aufgeteilte Holm (20) des Blatts teilweise aufgerollt wird, **dadurch gekennzeichnet, dass** die waagrechte Welle (21) mindestens zwei Aufrollzonen (30, 31, 32), um die der aufgeteilte Holm (10) des Blatts aufgerollt wird, und mindestens eine Befestigungszone (41, 42) enthält, um die Befestigungsbüchse (20) am Rotor zu befestigen, wobei jede Befestigungszone (41, 42) zwischen zwei Aufrollzonen (30-31, 31-32) angeordnet ist.

2. Drehflügler-Blatt nach Anspruch 1, **dadurch gekennzeichnet, dass** die waagrechte Welle (21) mit einer Anzahl von Aufrollzonen (30, 31, 32) versehen ist, die um eine Einheit größer ist als die Anzahl von Befestigungszonen (41, 42).

3. Drehflügler-Blatt nach einem der Ansprüche 1 bis 2, **dadurch gekennzeichnet, dass** die Befestigungsbüchse (20) mit mindestens einer hohlen, senkrechten, d.h. zur Drehachse des Rotors parallelen, Befestigungsachse (41', 42'), versehen ist, die jede Befestigungszone der waagrechten Welle (21) durchquert.

4. Drehflügler-Blatt nach einem der Ansprüche 1 bis 3, **dadurch gekennzeichnet, dass** jede Aufrollzone (30, 31, 32) der waagrechten Welle (21) ein längliches Profil aufweist.

5. Drehflügler-Blatt nach einem der Ansprüche 1 bis 4, **dadurch gekennzeichnet, dass** jede Befestigungszone (41, 42) der waagrechten Welle (21) ein längliches Profil aufweist.

6. Drehflügler-Blatt nach einem der Ansprüche 1 bis 5, **dadurch gekennzeichnet, dass** die mindestens eine Befestigungszone (41, 42) aus der mindestens einen Aufrollzone (30, 31, 32) über den ganzen Umfang der mindestens einen Aufrollzone (30, 31, 32) in Kontakt mit dem aufgeteilten Holm (10) vorsteht.

7. Drehflügler-Blatt nach Anspruch 6, **dadurch gekennzeichnet, dass** die mindestens eine Befestigungszone (41, 15 42) aus der mindestens einen Aufrollzone (30, 31, 32) um eine Dicke vorsteht, die mindestens der Dicke des aufgeteilten Holms (10) entspricht.

8. Verfahren zum Aufrollen eines Holms eines Drehflügler-Blatts um eine waagrechte Achse (21) einer Befestigungsbüchse (20) des Blatts, wobei der Holm ein auf eine Vorderkante (10) sowie auf zwei Außenflächen, die eine Oberseite (2) und eine Unterseite (3) dieses Blatts darstellen, aufgeteilter Holm ist, wobei der Holm mindestens ein Längsband (11, 12, 13) aufweist, das aus mehreren übereinanderliegenden Mineralfasern (F1, F2) zusammengesetzt ist, **dadurch gekennzeichnet, dass** die folgenden Schritte durchgeführt werden:
a) eine erste Faser (F1) wird auf einer Außenfläche (2) des Blatts angeordnet,
b) die erste Faser (F1) wird um die waagrechte Welle (21) gerollt und dann auf der anderen Außenfläche (3) des Blatts angeordnet, damit die erste Faser (F1) die Form eines länglichen C hat, um die Oberseite (2) und die Unterseite (3) des Blatts über eine erste Länge (D1) ausgehend vom Fuß des Blatts zumindest teilweise zu bedecken,
c) die Schritte a) und b) werden mit einer zweiten Faser (F2) wiederholt, die auf der ersten Faser (F1) angeordnet wird, wobei die zweite Faser (F2) die Oberseite (2) und die Unterseite (3) des Blatts über eine zweite Länge (D2) ausgehend vom Fuß des Blatts, die größer ist als die erste Länge (D1), zumindest teilweise bedeckt,
und dass während des Schritts b) die erste Faser (F1) um die waagrechte Welle (21) und um eine Montagewelle (60) gerollt wird, die zwischen dem Fuß des Blatts und der Endkappe des Blatts angeordnet ist, um einen länglichen Hohlzylinder zu erhalten, dann die erste Faser (F1) in Höhe der Montagewelle (60) abgeschnitten wird, um die Form eines länglichen C zu erhalten.

9. Verfahren nach Anspruch 8, **dadurch gekennzeichnet, dass** der Schritt c) mindestens einmal wiederholt wird, indem für jede folgende Faser die Oberseitenlänge und Unterseitenlänge vergrößert wird, die von der auf dem Blatt angeordneten Faser bedeckt wird.

10. Verfahren nach einem der Ansprüche 8 bis 9, **dadurch gekennzeichnet, dass** während des Schritts c) die Montagewelle verschoben wird, indem sie der Endkappe des Blatts angenähert wird, und der Schritt b) mit einer zweiten Faser wiederholt wird.

11. Verfahren nach einem der Ansprüche 8 bis 10, **dadurch gekennzeichnet, dass** die Schritte a) bis c) an einem Blatt nach einem der Ansprüche 1 bis 7 ausgeführt werden.
